# EUROPÄISCHE PATENTSCHRIFT

(11) **EP 2 417 844 B1**
(45) Veröffentlichungstag und Bekanntmachung des Hinweises auf die Patenterteilung: **03.05.2017**
(21) Anmeldenummer: 11401563.9
(22) Anmeldetag: 02.08.2011
(51) Int. Cl.: A01B 79/00, A01B 69/00

(54) **VERFAHREN ZUR STEUERUNG EINER LANDWIRTSCHAFTLICHEN ARBEITSMASCHINE ANHAND EINES ELEKTRONISCHEN FAHRGASSENSYSTEMS**
METHOD FOR STEERING AN AGRICULTURAL MACHINE USING AN ELECTRONIC GUIDING SYSTEM
PROCÉDÉ DE GUIDAGE D'UNE MACHINE AGRICOLE UTILSANT UN SYSTÈME DE GUDAGE ÉLECTRONIQUE

(30) Priorität: 10.08.2010 DE 102010036922
(43) Veröffentlichungstag der Anmeldung: 15.02.2012
(73) Patentinhaber: Amazonen-Werke H. Dreyer GmbH & Co. KG, 49205 Hasbergen (DE)
(72) Erfinder: Rahe, Florian, 49504 Lotte (DE); Scheufler, Bernd, 49205 Hasbergen (DE)

(56) Entgegenhaltungen:
- DE-A1-102004 027 242
- DE-A1-102009 005 601
- US-A1- 2002 072 850
- US-A1- 2008 269 956

## Beschreibung

Die Erfindung betrifft ein Verfahren zur Steuerung eines elektronischen Fahrgassensystems gemäß des Oberbegriffes des Patentanspruches 1.

Ein derartiges Verfahren zur Steuerung eines elektronischen Fahrgassensystems für landwirtschaftliche Arbeitsmaschinen ist durch die DE 10 2004 027 242 A1 bekannt. Dieses Fahrgassensystem hat sich für Mähdrescher und Bodenbearbeitungsmaschinen durchaus bewährt. Insbesondere für Pflegemaschinen, wie Düngersteuer und Feldspritzen lässt sich dieses System nicht ohne weiteres einsetzen, weil bei einer neuen Routenplanung, wenn Hindernisse auftauchen, berücksichtigt werden muss, dass die die Düngerstreuer und Feldspritzen ziehenden und/oder tragenden Schlepper möglichst nur für einen kurzen Weg die in dem bereits aufgewachsenen Pflanzenbestand sich befindlichen Fahrgassen ausschließlich zum Umfahren des insbesondere unerwarteten Hindernisses verlassen dürfen, um nur möglichst wenig des aufgewachsenen Pflanzenbestandes nieder zu fahren. Weiterhin ist bei Pflegemaschinen zu beachten, dass das Fahrgassensystem in der vorgesehenen Fahrtrichtung im aufgewachsenen Pflanzenbestand befahren werden muss, weil sonst beim Wendevorgang nicht gewünschte neue Wendewege im aufgewachsenen Pflanzenbestand durch niederfahren des aufgewachsenen Pflanzenbestandes entstehen.

Während der Aussaat von Saatgut wird ein Fahrgassensystem an gelegt, welches dann von eingesetzten Düngerstreuern und/oder Feldspritzen durchfahren wird, um möglichst keinen oder nur geringmöglichst wenig aufgewachsenen Pflanzenbestand wieder zu fahren. Hierbei ist eine bestimmte Fahrweise bzw. Fahrtrichtung und Rhythmus vorgegeben, damit die optimale Fahrtstrecke zurückgelegt wird und keine zusätzlichen Spuren in den Pflanzenbestand gefahren werden müssen. Dennoch geschieht es recht häufig, dass die vorgegebene Fahrweise nicht eingehalten wird bzw. nicht eingehalten werden kann, weil der Fahrer einen Fehler macht oder ein unerwartetes Hindernis auftaucht, welches während der Aussaat noch nicht vorhanden war, z.B. eine Nassstelle und/oder eine versperrte Zufahrt zum zu bearbeitenden Feld.

Der Erfindung liegt die Aufgabe zu Grunde, ein optimiertes Verfahren zur Steuerung eines elektronischen
Fahrgassensystems, wenn in einem bereits aufgewachsenen Pflanzenbestand die angelegte Fahrgasse verlassen werden muss und/oder nicht vorgesehen angefahren und/oder befahren werden kann, vorzuschlagen.

Diese Aufgabe wird erfindungsgemäß dadurch gelöst, dass bei Verlassen der Fahrgasse im festgelegten Rhythmus und festgelegter Fahrtrichtung aufgrund nicht bei der Planung und Festlegung der definierten Fahrtrouten berücksichtigter Ereignisse, das Verfahren derart ausgelegt ist, dass dem Fahrer auf einem Display anzeigbar ist, dass die zwischen dem Verlassen des Rhythmus der definierten Fahrtroute und der im festgelegten Rhythmus nächstliegenden Fahrgasse unter Überspringen der nicht im Rhythmus liegenden Fahrgasse die dann weiter zu befahrende Fahrgasse anzeigbar ist.

Infolge dieser Maßnahmen wird sichergestellt, dass mit der Maschine auf kürzestem Wege die im richtigen Rhythmus und richtiger Fahrtrichtung liegende Fahrgasse angefahren wird und/oder anfahrbar ist. Hierdurch wird erreicht, dass nur der geringstmöglich erforderliche Pflanzenbestand zum fortfahren im richtigen Fahrgassenrhythmus nieder gefahren wird.

Gemäß der Erfindung prüft der Bordcomputer aufgrund des in seinem Speicher hinterlegten Fahrgassenprogrammes oder entsprechender hinterlegter Algorithmen, wie die optimale Wegstrecke für das Befahren des angelegten Fahrgassensystems verläuft, um den Düngerstreuer oder die Feldspritze bzw. das dem Steuer oder der Feldspritze zugeordnete Zugfahrzeug wieder auf die Fahrgasse zurückzuführen, die der vorgegebenen Fahrweise entspricht, um möglichst wenig Pflanzenbestand nieder zu fahren.

Um schnellstmöglich die Korrektur für das optimale Weiterfahren in Fahrgassensystem ermitteln zu können, ist vorgesehen, dass die dann korrigierte Weiterfahrt im definierten Fahrgassenrhythmus von einem dem Fahrgassensystem zugeordneten Korrekturprogramm unmittelbar berechnet wird.

Um sicherzustellen, dass das gesamte zu bearbeitende Territorium in optimaler Weise lückenlos bei Beendigung des Arbeitsvorganges abgearbeitet ist, ist vorgesehen, dass das Fahrgassensystem derart ausgelegt ist, dass nach Abarbeitung der definierten Fahrtrouten in dem abzuarbeitenden Territorium die übersprungenen Fahrgassen in einem Nacharbeitsgang abgearbeitet werden.

Weitere Einzelheiten der Erfindung sind der Beispielsbeschreibung und den Zeichnungen zu entnehmen. Hierbei zeigen
- Fig. 1: der für das Befahren des Fahrgassensystems vorgesehene Ackerschlepper, der einen ein Display aufweisenden Bordrechner aufweist, und einer angehängten Feldspritze,
- Fig. 2: ein mit einem Fahrgassensystem angelegtes Feld in schematischer Darstellung,
- Fig. 3: das Fahrgassensystem in einem größeren Maßstab, in ausschnittsweise zur und schematischer Darstellung,
- Fig. 4: das Fahrgassensystem nach Fig. 2, jedoch mit falschem Beginn und weiterer falscher Befahrensweise des angelegten Fahrgassensystems,
- Fig. 5: die Darstellung des Befahrens des Fahrgassensystem in einem größeren Maßstab, in ausschnittsweiser und schematischer Darstellung nach Fig. 4,
- Fig. 6: das Fahrgassensystem nach Fig. 2, jedoch mit falschem Beginn und anschließender Korrektur und anschließender richtiger befahrensweise des angelegten Fahrgassensystems und
- Fig. 7: die Darstellung des Befahrens des Fahrgassensystem in einem größeren Maßstab, in ausschnittsweiser und schematischer Darstellung nach Fig. 6.

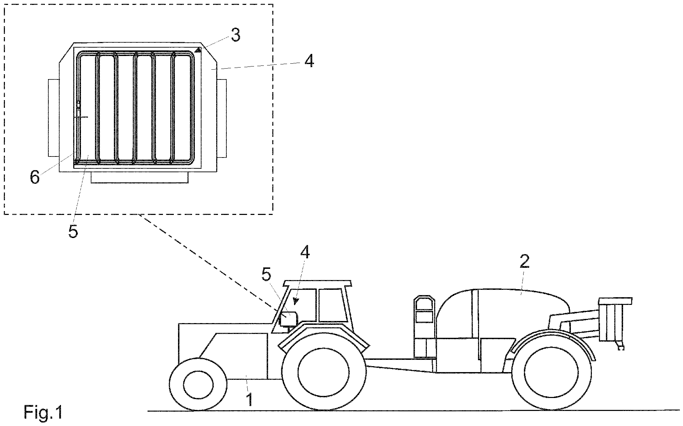

Der Ackerschlepper 1 mit der angehängten Feldspritze 2 ist für das Befahren des Fahrgassensystems gemäß Fig. 1 vorgesehen. Das Fahrgassensystem 3 ist als elektronisches Fahrgassensystem auf einem Bordrechner 4 des Ackerschleppers 1 abgespeichert und auf dem Display 5 des Bordrechners 4 dem Fahrer des Ackerschleppers 1 anzeigbar. Hierbei wird dem Fahrer auf dem Display 5 des Bordrechners 4 der vorgesehene und abgespeicherte Fahrweg 6 auf dem Display 5 entsprechend angezeigt. Bei den sogenannten Fahrgassen 6 handelt es sich um definierte und in vorgeschriebener Fahrtrichtung 7 von der landwirtschaftlichen Arbeitsmaschine abzufahrende Fahrtrouten in einem abzuarbeitenden Territorium.

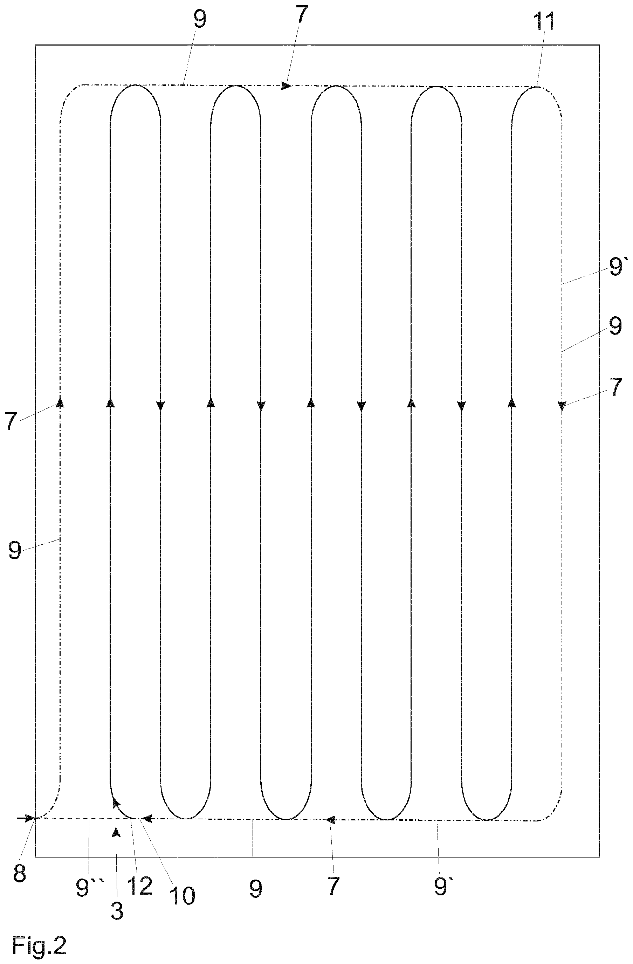

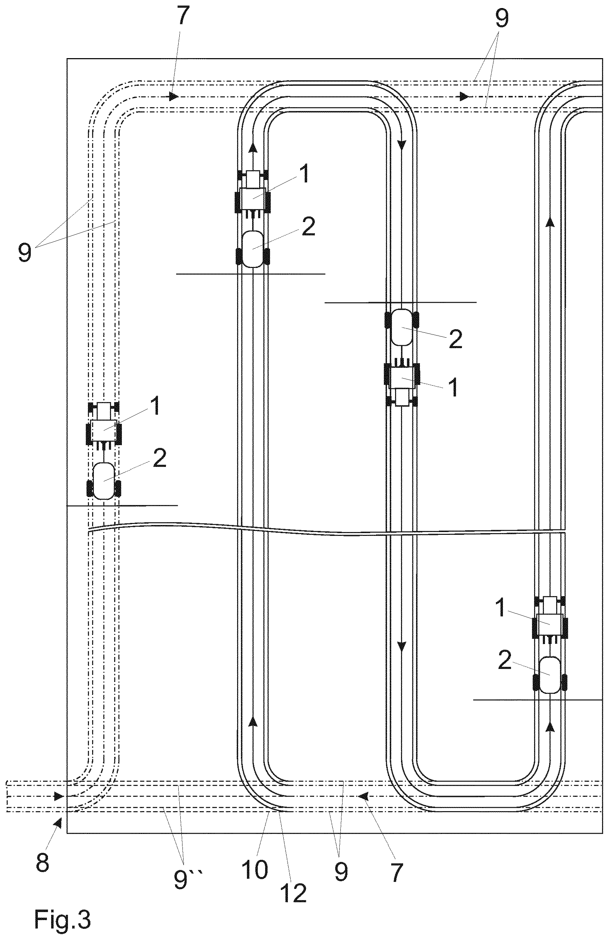

In den Fig. 2 und 3 ist die richtige Befahrensweise des Fahrgassensystems 3 dargestellt. An der Zufahrt 8 zu dem Feld beginnt der Fahrer des die Feldspritze ziehenden Ackerschlepper mit dem Ausbringen von Pflanzenschutzmittel mit der Feldspritze 2 entsprechend der auf dem Acker angelegten Fahrgassen 6 des Fahrgassensystems 3. Zunächst wird nach diesem hier festgelegten Fahrgassensystem 3 entsprechend der strichpunktierten Linien 9 in vorgesehener Fahrtrichtung 7 das Feld einmal umfahren. An der Stelle 10, also nach dem einmaligen Umfahren des gesamten Feldes, biegt der Fahrer mit dem Ackerschlepper 1 und der Feldspritze 2 entsprechend der Anzeige auf dem Display 5 ab und fährt die angelegten Fahrgassen 6 entsprechend der mit den Pfeilen 7 jeweils dargestellten Fahrtrichtung in korrekter Weise ab. Wenn der Fahrer dann an der Stelle 11 nach dem Abarbeiten des Feldes angekommen ist fährt er durch die Randspur 9' mit abgeschalteten Ausbringungsorganen ab bis zur Stelle 12 und dann über die Verbindung 9", die mit gestrichen Linien dargestellt ist, aus dem Feldbereich an der Stelle 8, die auch gleichzeitig die vorgesehene Zufahrt ist, wieder heraus.

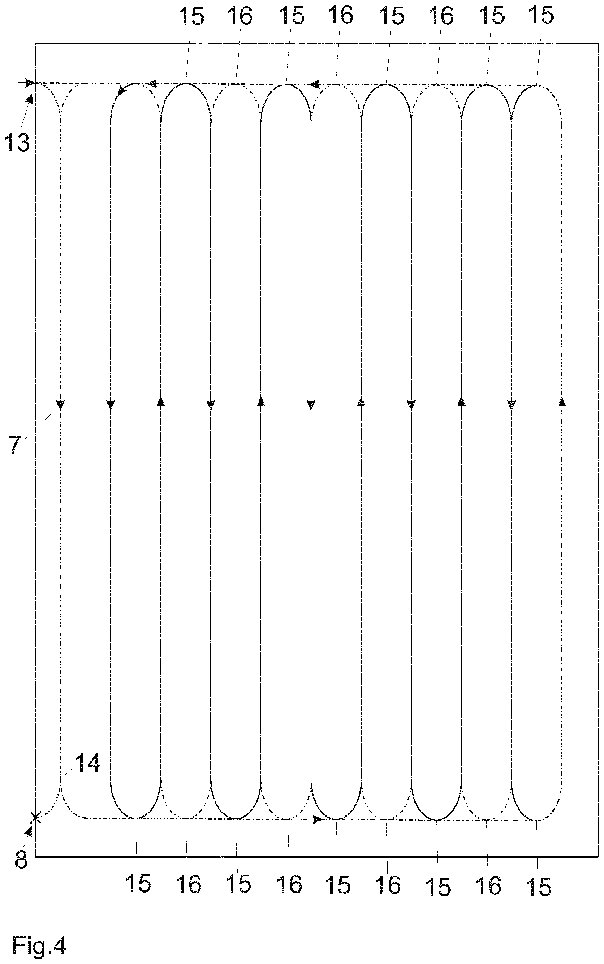

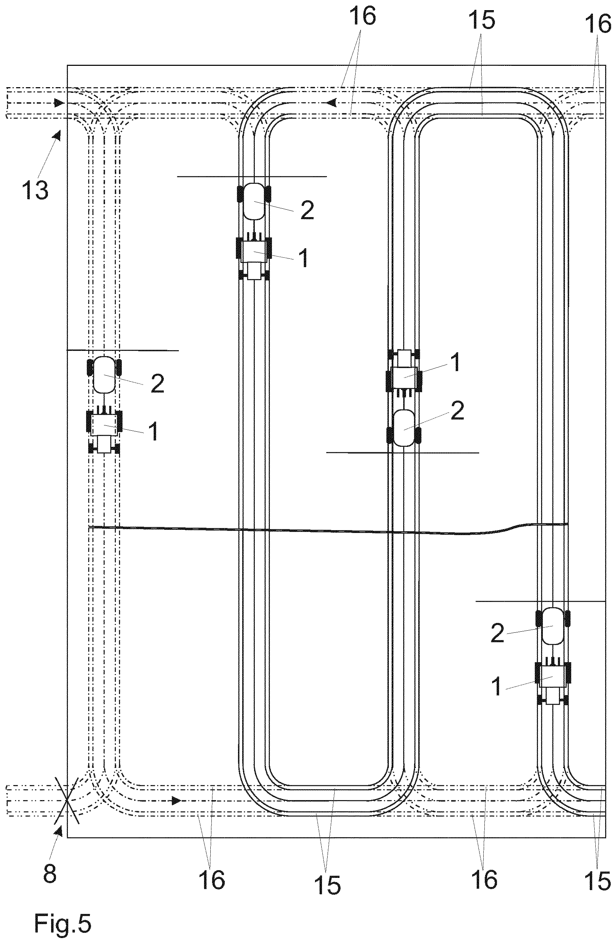

Aufgrund nicht vorhersehbarer Umstände kann bei den in Fig. 4 und 5 dargestellten System nicht, wie gemäß der Fig. 2 und 3 vorgesehen ist, das Feld nicht an der Stelle 8, also der eigentlich vorgesehenen Zufahrt befahren werden, sondern der Fahrer muss an der Stelle 13 das Feld befahren. Nun befährt er zunächst in Pfeilrichtung 7 die erste Randspur entgegen der an sich vorgesehenen Errichtung, wie sie in den Fig. 2 und 3 vorgesehen ist, und kommt dann an der Stelle 14 an. Hier biegt er dann in die zweite Fahrspur auf der linken Seite des Feldes, gemäß Fig. 4 und 5 ein und fährt entgegen der vorgesehenen Fahrtrichtung die angelegten Fahrgassen in falscher Richtung, wie ein Vergleich mit der Fig. 2 und 3 zeigt, ab. Hier muss er dann, wie in den Fig. 4 und 5 dargestellt ist, zusätzliche Wendebögen zu den bereits bestehenden Wendebögen 16 in den Bestand hineinfahren, wie dies mit den durchgezogenen Linien bei den Wendekurven 15 dargestellt ist. Diese Wendekurven 15, die mit durchgezogenen Linien dargestellt sind, werden zusätzlich zu den bereits im Bestand vorhandenen Wendekurven 16, die mit gestrichen Linien dargestellt sind, hinein gefahren. Hierdurch entsteht ein zusätzlicher Schaden im Bestand. Dieser Schaden ist nicht erwünscht. Über die rechte Randspur fährt der Fahrer mit dem Ackerschlepper 1 und der Feldspritze 2 mit abgeschalteten Ausbringorganen an der Stelle 13, an der Fahrer hinein gefahren ist, dann auch wieder hinaus.

Um nun den Schaden in einem derartigen Fall möglichst gering zu halten, fährt der Fahrer an der Stelle 13 zunächst auf den Acker. Er befährt zunächst dann mit dem Ackerschlepper 1 und der Feldspritze 2 die erste Fahrspur 9 in Pfeilrichtung 7. hierbei bemerkt der Bordcomputer 4, das die Fahrgasse 9 entgegen der vorgesehenen Fahrtrichtung, die Fig. 2 und 3 gezeigt, befahren wird. Zunächst umfährt der Fahrer mit dem Ackerschlepper 1 und der Feldspritze 2 das Feld in Pfeilrichtung 7 jeweils in der Randspur. Während dieser Zeit wird von dem im Bordrechner 4 hinterlegte Programm eine Korrektur für das weitere befahren der Fahrgassen 9 berechnet. Dies erfolgt, um nun keinen großen Schaden anzurichten.

Hierzu wird nach folgendem Prinzip vorgegangen: Bei Verlassen und/oder Befahren der Fahrgasse 9 im festgelegten Rhythmus und festgelegter Fahrtrichtung 7 aufgrund nicht bei der Planung und Festlegung der definierten Fahrgassen 9 berücksichtigten Ereignisse, ist aufgrund der Auslegung des Systems 3 vorgesehen, das dem Fahrer auf einem Display 5 angezeigt wird, dass die zwischen dem Verlassen des Rhythmus und der definierten Fahrtroute und der im festgelegten Rhythmus nächstliegenden Fahrgasse 3 unter Überspringen der nicht im Rhythmus liegenden Fahrgasse die dann weiter zu befahrende Fahrgasse angezeigt wird. Diese dann auf dem Display 5 angezeigte Fahrgasse wird dann vom Fahrer befahren. Somit wird die dann korrigierte Weiterfahrt im definierten Fahrgassenrhythmus von einem dem Fahrgassensystem 3 zugeordneten Korrekturprogramm unmittelbar berechnet.

Im vorgesehenen Ausführungsbeispiel bedeutet dies, dass der Fahrer, wenn an der Stelle 14 mit dem Ackerschlepper 1 und der der Feldspritze 2 angekommen ist, in die Fahrgasse 15 abbiegt. An der Stelle 16 wird nicht in die Fahrgasse 17 eingebogen, sondern diese übersprungen und in die Fahrgasse 18 eingebogen. Jetzt befindet sich der Ackerschlepper 1 und die Feldspritze 2 wieder bei dem weiteren Befahren der Fahrgassen in dem vorgesehenen Fahrgassenrhythmus. Wenn der Fahrer mit dem Ackerschlepper 1 und der Feldspritze 2 an der Stelle 19 angekommen ist, wird nach rechts in die rechte äußere Randspur eingebogen und die Randspur bis zu der Stelle 20 befahren. Hier biegt dann der Fahrer mit dem Ackerschlepper 1 und der Feldspritze 2 in die Fahrgasse 17 ab. Wenn der Fahrer mit dem Ackerschlepper 1 und der Feldspritze 2 an der Stelle 14 angekommen ist, biegt er nach links ab und fährt über die Spur 21 an der Stelle 13 aus dem Feld heraus

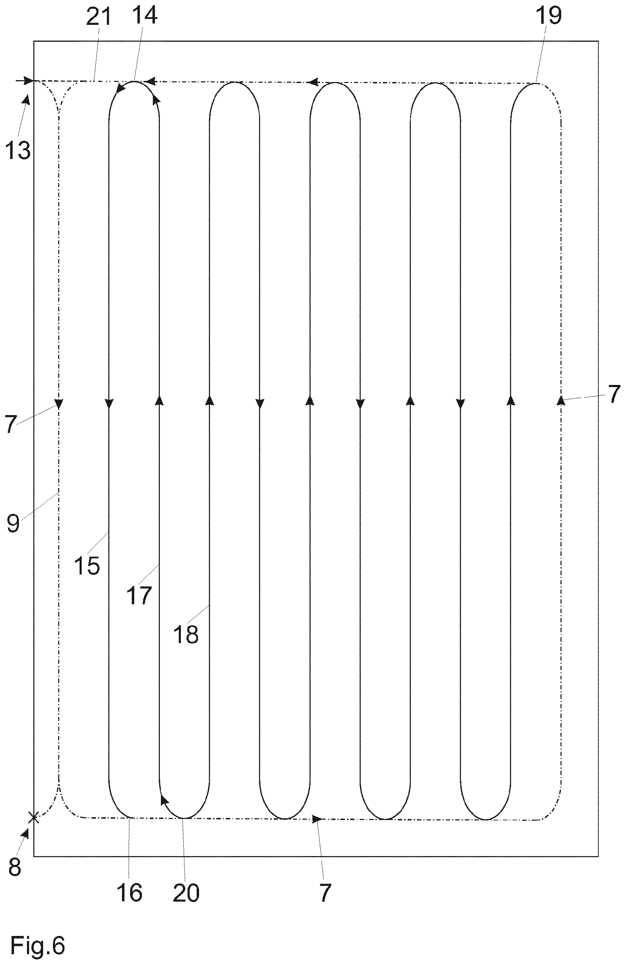

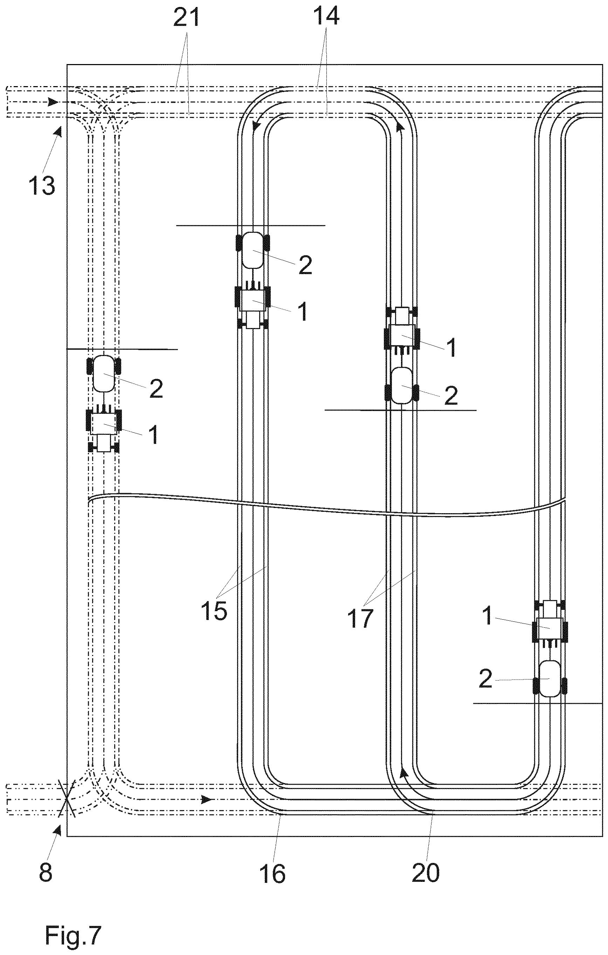

Somit wird nach dem Abarbeiten der Fahrgassen in vorgeschriebener Fahrtrichtung nach den definierten Fahrtrouten in dem abzuarbeiten Territorium die übersprungene Fahrgassen in einem Nacharbeitsgang abgearbeitet, wie in den Fig. 6 und 7 gezeigt ist.

## Patentansprüche

1. Verfahren zur Steuerung einer landwirtschaftlichen Arbeitsmaschine anhand eines elektronischen Fahrgassensystems, wobei der landwirtschaftlichen Arbeitsmaschine definierte und in vorgeschriebener Fahrtrichtung abzufahrende Fahrtrouten, so genannte Fahrgassen, in einem abzuarbeitenden Territorium, insbesondere in einem bereits aufgewachsenen Pflanzenbestand zugeordnet sind, **dadurch gekennzeichnet, dass** bei Verlassen der Fahrgasse im festgelegten Rhythmus und festgelegter Fahrtrichtung (7) aufgrund nicht bei der Planung und Festlegung der definierten Fahrtrouten (9) berücksichtigter Ereignisse, das System derart ausgelegt ist, dass dem Fahrer auf einem Display (5) zwischen dem Verlassen des Rhythmus der definierten Fahrtroute und der im festgelegten Rhythmus nächstliegenden Fahrgasse unter Überspringen der nicht im Rhythmus liegenden Fahrgasse (17) die dann weiter zu befahrende Fahrgasse (18) anzeigbar ist, dass die dann korrigierte Weiterfahrt im definierten Fahrgassenrhythmus von einem dem Fahrgassensystem (3) zugeordneten Korrekturprogramm unmittelbar berechnet wird.

2. Verfahren nach Anspruch 1, **dadurch gekennzeichnet, dass** das Fahrgassensystem (3) derart ausgelegt ist, dass nach Abarbeitung der definierten Fahrtrouten (9) in dem abzuarbeitenden Territorium die übersprungenen Fahrgassen (17) in einem Nacharbeitsgang abgearbeitet werden.

## Claims

1. Method for steering an agricultural machine using an electronic driving lane system, wherein the agricultural machine is assigned defined driving routes, referred to as driving lanes, to be driven along in a prescribed driving direction, in a piece of ground to be processed, in particular in an already fully grown plant stock, **characterized in that** when the driving lane is exited with a specified rhythm and in a defined driving direction (7) owing to events which are not taken into account in the planning and specification of the defined driving routes (9), the system is configured in such a way that, between the exiting of the rhythm of the defined driving route and the driving lane which is the next in the defined rhythm, as the driving lane (17) which is not in the rhythm is jumped over, the driving lane (18) which is then to be driven along further can be displayed to the driver on the display (5), and **in that** the continued driving, then corrected, in the defined driving lane rhythm is calculated immediately by a correction program which is assigned to the driving lane system (3).

2. Method according to Claim 1, **characterized in that** the driving lane system (3) is configured in such a way that after the defined driving routes (9) have been processed in the piece of ground which is to be processed, the driving lanes (17) which have been jumped over are processed in a post-processing operation.

## Revendications

1. Procédé destiné à la commande d'une machine de travail agricole à l'aide d'un système de jalonnage électronique, selon lequel des trajets de circulation, qui sont communément dénommés des voies jalonnées et devant être parcourus en suivant un sens de la circulation prescrit et défini, sont associés à la machine de travail agricole dans un territoire devant être traité, en particulier dans une zone où la croissance de la végétation a déjà progressé, **caractérisé en ce que**, en quittant la voie jalonnée, selon le rythme déterminé et selon le sens de la circulation (7) déterminé, en raison d'événements qui n'ont pas été pris en compte lors de la planification et de la détermination des trajets de circulation (9) définis, le système est conçu de telle sorte que la voie jalonnée (18) devant encore être parcourue peut être affichée à l'attention du conducteur sur un affichage (5) entre le moment où le rythme du trajet de circulation défini est abandonné et la prochaine voie jalonnée devant être réalisée selon le rythme déterminé, en négligeant la voie jalonnée (17) qui n'est pas réalisée selon le rythme déterminé, et **caractérisé en ce que** la poursuite du trajet ainsi corrigé est calculée directement selon le rythme de la voie jalonnée qui a été défini par un programme de correction associé au système de jalonnage (3).

2. Procédé selon la revendication 1, **caractérisé en ce que** le système de jalonnage (3) est conçu de telle sorte que les voies jalonnées (17) dont le traitement a été omis sont réalisées dans une phase de travail ultérieure, après le traitement des trajets de circulation (9) définis dans le territoire devant être traité.
